# EUROPÄISCHE PATENTSCHRIFT

(11) **EP 2 126 447 B1**
(45) Veröffentlichungstag und Bekanntmachung des Hinweises auf die Patenterteilung: **14.03.2012**
(21) Anmeldenummer: 07816213.8
(22) Anmeldetag: 26.10.2007
(51) Int. Cl.: E02F 9/22, F16L 37/36

(54) **SCHNELLKUPPLUNG FÜR DIE VERBINDUNG VON HYDRAULIKLEITUNGEN, INSBESONDERE BEI ERDBEWEGUNGSMASCHINEN SOWIE DEREN AUSWECHSELBAREN AUSBAUGERÄTEN UND WERKZEUGEN**
QUICK CONNECT COUPLING FOR CONNECTING HYDRAULIC LINES, ESPECIALLY IN EARTH MOVING MACHINES AND THE INTERCHANGEABLE ADD-ON DEVICES AND TOOLS THEREOF
RACCORD RAPIDE POUR ASSEMBLER DES CONDUITES HYDRAULIQUES, EN PARTICULIER DANS DES ENGINS DE TERRASSEMENT ET LEURS DISPOSITIFS AUXILIAIRES ET OUTILS INTERCHANGEABLES

(30) Priorität: 13.12.2006 WO PCT/CH2006/000694
(43) Veröffentlichungstag der Anmeldung: 02.12.2009
(73) Patentinhaber: Oscar Meier AG, 2554 Meinisberg (CH)
(72) Erfinder: BERNHARD, Ernst, 2558 Aegerten (CH)
(74) Vertreter: Rentsch Partner AG
(86) Internationale Anmeldenummer: PCT/CH2007/000530
(87) Internationale Veröffentlichungsnummer: WO 2008/071015

(56) Entgegenhaltungen:
- EP-A- 1 538 385
- DE-A1- 2 225 314
- US-A- 4 674 535
- US-A- 4 949 745
- US-A- 5 829 480

## Beschreibung

### TECHNISCHES GEBIET

Die vorliegende Erfindung bezieht sich auf das Gebiet der Technik für die Verbindung von Hydraulikleitungen an Erdbewegungsmaschinen sowie deren Werkzeugen und Anbaugeräten, sowie sonstigen Hydraulikanschlüssen. Sie betrifft eine Schnellkupplung gemäss dem Oberbegriff des Anspruchs 1 (US 5,829,480 A).

### STAND DER TECHNIK

Bekannte Schnellkupplungen für Hydraulikanschlüsse erzeugen in angeschlossenem Zustand eine axiale Kraft, welche durch die Kolbenfläche des Anschlussnippels multipliziert mit dem hydraulischen Druck entsteht. Daher werden bei kleinen Anschlüssen oft Verriegelungen mit einer Reihe tragfähiger Kugeln eingebaut.

Bei Anschlüssen mit grösserem Durchlass sind gross dimensionierte Gewindeverschraubungen unumgänglich.

### DARSTELLUNG DER ERFINDUNG

Es ist daher Aufgabe der Erfindung, eine Schnellkupplung zu schaffen, welche die Nachteile bekannter Schnellkupplungen vermeidet und sich insbesondere dadurch auszeichnet, dass beim Anschluss der Hydraulik keine axiale Kraft erzeugt wird.

Die Aufgabe wird durch die Gesamtheit der Merkmale des Anspruchs 1 gelöst. Der Kern der Erfindung besteht darin, dass die Schnellkupplung so ausgebildet ist, dass in gekuppeltem Zustand die zu übertragende Hydraulikflüssigkeit quer zur Kupplungsachse aus dem einen Anschlussteil austritt und quer zur Kupplungsachse in das andere Anschlussteil eintritt.

Eine Ausgestaltung der Erfindung ist dadurch gekennzeichnet, dass in gekuppeltem Zustand zwischen den beiden Anschlussteilen ein in axialer Richtung zu beiden Seiten abgedichteter, koaxialer Ringraum zur Übertragung der Hydraulikflüssigkeit ausgebildet wird, und dass die beiden Anschlussteile durch radiale Bohrungen mit dem Ringraum Hydraulikflüssigkeit austauschen können.

Eine bevorzugte Weiterbildung dieser Ausgestaltung zeichnet sich dadurch aus, dass die beiden Anschlussteile ein weibliches Anschlussteil und ein männliches Anschlussteil umfassen, dass das männliche Anschlussteil einen ersten koaxialen Anschlusskolben mit einer ersten koaxialen Bohrung aufweist, dass das weibliche Anschlussteil einen zweiten koaxialen Anschlusskolben mit einer zweiten koaxialen Bohrung zur Aufnahme des ersten Anschlusskolbens aufweist, dass der koaxiale Ringraum beim Einschieben des ersten Anschlusskolbens in die zweite koaxiale Bohrung des zweiten Anschlusskolbens gebildet wird, und dass eine erste radiale Bohrung im ersten Anschlusskolben von der ersten koaxialen Bohrung in den koaxialen Ringraum und eine zweite radiale Bohrung im zweiten Anschlusskolben vom koaxialen Ringraum in den umgebenden Aussenraum des zweiten Anschlusskolbens führt.

Gemäss einer anderen Ausgestaltung der Erfindung ist in den beiden Anschlussteilen jeweils ein aussen liegender Anschluss für die Hydraulikflüssigkeit angeordnet und ein vorzugsweise durch den Steckvorgang betätigbarer Ventilmechanismus vorgesehen, welcher die hydraulische Verbindung zwischen dem jeweiligen Anschluss und der ersten koaxialen Bohrung bzw. dem umgebenden Aussenraum des zweiten Anschlusskolbens unterbricht, wenn die Anschlussteile auseinander gezogen sind, und die hydraulische Verbindung zwischen dem jeweiligen Anschluss und der ersten koaxialen Bohrung bzw. dem umgebenden Aussenraum des zweiten Anschlusskolbens herstellt, wenn die Anschlussteile ineinander gesteckt sind.

Insbesondere umfasst der Ventilmechanismus jeweils eine relativ zum Anschlusskolben in axialer Richtung bewegliche Schiebemuffe, welche den Anschlusskolben konzentrisch umgibt und eine Durchgangsbohrung mit einem in der Mitte angeordneten Überströmraum mit vergrössertem Innendurchmesser aufweist, wobei der Anschlusskolben die Durchgangsbohrung mittels einer umlaufenden Dichtung in zwei voneinander dichtend getrennte Abschnitte unterteilt, die nur dann miteinander in Verbindung stehen, wenn sich bei einer bestimmten relativen Position von Anschlusskolben und Schiebemuffe die umlaufende Dichtung im Überströmraum befindet.

Eine andere Ausgestaltung zeichnet sich dadurch aus, dass jedes Anschlussteil ein Gehäuse aufweist, dass die Anschlusskolben jeweils fest mit dem Gehäuse verbunden sind, und dass die Schiebemuffen relativ zum Gehäuse in axialer Richtung beweglich sind, wobei insbesondere die Schiebemuffen gegen den Druck einer Druckfeder entgegen der Einsteckrichtung zurückschiebbar sind. Eine weitere Ausgestaltung der Erfindung ist dadurch gekennzeichnet, dass in der zweiten koaxialen Bohrung des zweiten Anschlusskolbens ein Verschlusskolben angeordnet ist, welcher bei auseinander gezogenen Anschlussteilen die zweite koaxiale Bohrung nach aussen abschliesst und beim Ineinanderstecken der Anschlussteile vom ersten Anschlusskolben gegen den Druck einer Druckfeder in die zweite koaxiale Bohrung zurückgeschoben wird.

Insbesondere im Hinblick auf eine vereinfachte Montage ist es vorteilhaft, wenn die Anschlüsse an den hinteren Enden der Anschlusskolben angeordnet sind, und wenn die Anschlusskolben bei angeschlossener Hydraulikleitung von hinten in das Gehäuse einschiebbar und am Gehäuse befestigbar sind.

Eine alternative Ausgestaltung der Erfindung ist dadurch gekennzeichnet, dass im ersten Anschlussteil ein sich in Richtung der Kupplungsachse erstreckender erster Raum für die Hydraulikflüssigkeit vorgesehen ist, welcher am einen Ende mit einer Anschlussleitung des ersten Anschlussteils in Verbindung steht, dass im zweiten Anschlussteil ein sich in Richtung der Kupplungsachse erstreckender zweiter Raum für die Hydraulikflüssigkeit vorgesehen ist, welcher am einen Ende mit einer Anschlussleitung des zweiten Anschlussteils in Verbindung steht, dass der erste Raum am anderen Ende durch einen ersten Verschlussmechanismus verschliessbar ist, welcher den ersten Raum im ausgekuppelten Zustand dichtend verschliesst und im gekuppelten Zustand öffnet, dass der zweite Raum am anderen Ende durch einen zweiten Verschlussmechanismus verschliessbar ist, welcher den zweiten Raum im ausgekuppelten Zustand dichtend verschliesst und im gekuppelten Zustand öffnet, und dass die beiden Räume und Verschlussmechanismen so ausgebildet sind, dass in gekuppeltem Zustand die Hydraulikflüssigkeit zwischen den beiden Räumen im Wesentlichen in radialer Richtung fliesst.

Vorzugsweise sind in den beiden Verschlussmechanismen zum Verschliessen der Räume Dichtstellen ausgebildet, in welchen wegen der Druckverhältnisse Metall dichtend auf Metall liegt.

Insbesondere sind die beiden Räume als konzentrisch zur Kupplungsachse angeordnete Ringräume ausgebildet.

Eine weitere Ausgestaltung der Erfindung zeichnet sich dadurch aus, dass der Ringraum im ersten Anschlussteil zwischen einer zentralen axialen Kolbenstange und einer die Kolbenstange im Abstand konzentrisch umgebenden inneren Schiebemuffe ausgebildet ist und der zugehörige Verschlussmechanismus durch die innere Schiebemuffe und einen am vorderen Ende der Kolbenstange angeordneten Anschlusskolben gebildet wird, dass der Ringraum im zweiten Anschlussteil zwischen einer Schiebemuffe und einem die Schiebemuffe im Abstand konzentrisch umgebenden äusseren Rohr ausgebildet ist und der zugehörige Verschlussmechanismus durch die Schiebemuffe und das am vorderen Ende sich verjüngende äussere Rohr gebildet wird, wobei die innere Schiebemuffe und der Anschlusskolben im ersten Anschlussteil denselben Aussendurchmesser aufweisen, und das sich verjüngende Ende des äusseren Rohres und die Schiebemuffe im zweiten Anschlussteil denselben Innendurchmesser aufweisen, und dass der Aussendurchmesser im wesentlichen gleich dem Innendurchmesser ist, so dass beim Kuppeln die innere Schiebemuffe und der Anschlusskolben in das sich verjüngende Ende des äusseren Rohres und die Schiebemuffe einfahren können.

Insbesondere wird der Verschlussmechanismus im ersten Anschlussteil beim Kuppeln dadurch geöffnet, dass die innere Schiebemuffe gegen den Druck einer Feder relativ zum ortsfesten Anschlusskolben nach hinten geschoben wird, und der Verschlussmechanismus im zweiten Anschlussteil wird beim Kuppeln dadurch geöffnet, dass die Schiebemuffe gegen den Druck einer Feder relativ zum ortsfesten, sich verjüngenden Ende des äusseren Rohres nach hinten geschoben wird.

Eine andere Ausgestaltung zeichnet sich dadurch aus, dass zum Verschieben der Schiebemuffe im ersten Anschlussteil eine die innere Schiebemuffe konzentrisch umschliessende, in axialer Richtung verschiebbare und vom äusseren Rohr des zweiten Anschlussteils betätigbare äussere Schiebemuffe vorgesehen ist, und dass zum Verschieben der Schiebemuffe im zweiten Anschlussteil ein von der Schiebemuffe konzentrisch umschlossener, in axialer Richtung verschiebbarer und von dem Anschlusskolben des ersten Anschlussteils betätigbarer Verschlusskolben vorgesehen ist, wobei im ersten Anschlussteil zwischen der äusseren Schiebemuffe und dem Anschlusskolben, und im zweiten Anschlussteil zwischen dem Verschlusskolben und dem sich verjüngenden Ende des äusseren Rohres und der Schiebemuffe Dichtungen angeordnet sind, und die Verschlussmechanismen nur dann öffnen, wenn die Dichtungen vollständig überdeckt sind.

Zusätzlich können im Verschlusskolben Mittel zur Erlangung der Wirkung eines Rückschlagventils eingebautsein, welche Mittel insbesondere eine dünne Ventilscheibe umfassen, die im Verschlusskolben angebrachte Ventilbohrungen von innen öldicht verschliesst.

Weiterhin ist es für die Funktion vorteilhaft, wenn am Anschlusskolben und am Verschlusskolben kleine Entlastungsnuten und in den Verschlusskolben stirnseitig kleine Nuten eingearbeitet sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: den mit einer Verlängerung ausgerüsteten Arm einer Erdbewegungsmaschine, z.B. eines Baggers mit an der Verbindungsstelle angeordneten Schnellkupplungen gemäss einem Ausführungsbeispiel der Erfindung;
- Fig. 2: in einer Explosionsdarstellung das männliche Anschlussteil einer Schnellkupplung nach Fig. 1;
- Fig. 3: in einer Explosionsdarstellung das weibliche Anschlussteil einer Schnellkupplung nach Fig. 1;
- Fig. 4: die beiden Anschlussteile aus Fig. 2 und 3 im zusammengebauten Zustand vor dem Kuppeln;
- Fig. 5: die beiden Anschlussteile aus Fig. 4 im gekuppelten Zustand;
- Fig. 6: die Draufsicht in axialer Richtung auf die Befestigungsmittel zur Befestigung der Anschlusskolben an den Gehäusedeckeln der beiden Anschlussteile aus Fig. 2 und 3;
- Fig. 7: zwei Anschlussteile gemäss einem anderen Ausführungsbeispiel der Erfindung im zusammengebauten Zustand vor dem Kuppeln;
- Fig. 8: die beiden Anschlussteile aus Fig. 7 im gekuppelten Zustand;
- Fig. 9: ein Schnellanschlusssystem mit mehreren Schnellkupplungen gemäss Fig. 4 und 5, die in einem Block zusammengefasst sind; und
- Fig. 10a-e: in verschiedenen Teilfiguren eine Schnellkupplung gemäss einem anderen Ausführungsbeispiel der Erfindung, wobei in den Teilfiguren verschiedene Phasen beim Kupplungsvorgang wiedergegeben sind und die Teilfigur 10c einen vergrösserten Ausschnitt aus der Teilfigur 10b zeigt.

### WEGE ZUR AUSFÜHRUNG DER ERFINDUNG

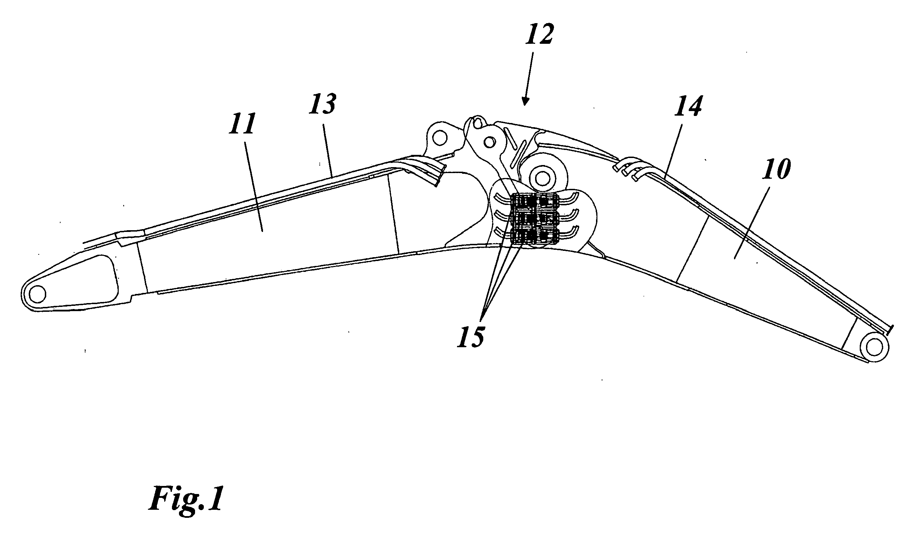

Schnellkupplungen gemäss der Erfindung können in den unterschiedlichsten Bereichen Anwendung finden, wo Hydraulikleitungen schnell und unkompliziert miteinander lösbar verbunden werden müssen. Ein besonders wichtiges Anwendungsgebiet ist das der Erdbewegungsmaschinen (z.B. Bagger oder dgl.) und deren Werkzeugen und Anbaugeräten. In Fig. 1 ist als Anwendungsbeispiel ein Arm 10 eines (nicht dargestellten) Baggers gezeigt, an dessen einem Ende eine Verlängerung 11 angebaut ist. Vom Bagger kommend laufen erste Hydraulikleitungen 14 am Arm 10 entlang und sollen an der Verbindungsstelle 12 mit zweiten Hydraulikleitungen 13 verbunden werden, die an der Verlängerung 11 entlang zu einem Werkzeug o.ä. führen. Für die lösbare Verbindung der ersten und zweiten Hydraulikleitungen 14 bzw. 13 sind im Bereich der Verbindungsstelle 12 eine der Anzahl der Hydraulikleitungen 13, 14 entsprechende Anzahl von Schnellkupplungen 15 angeordnet, die gemäss einem bevorzugten Ausführungsbeispiel der Erfindung ausgeführt sind (der Anschluss der Hydraulikleitungen 13, 14 an den Schnellkupplungen 15 ist in Fig. 1 nur angedeutet; die Leitungen sind nicht durchgezeichnet).

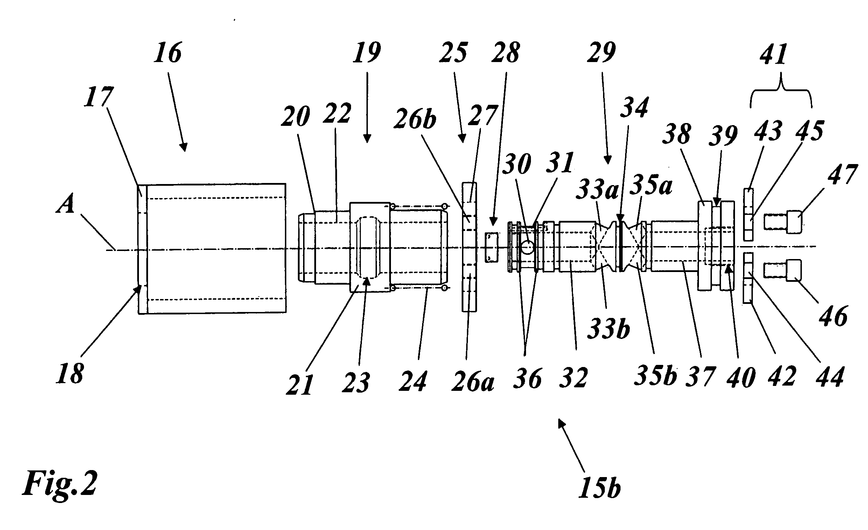

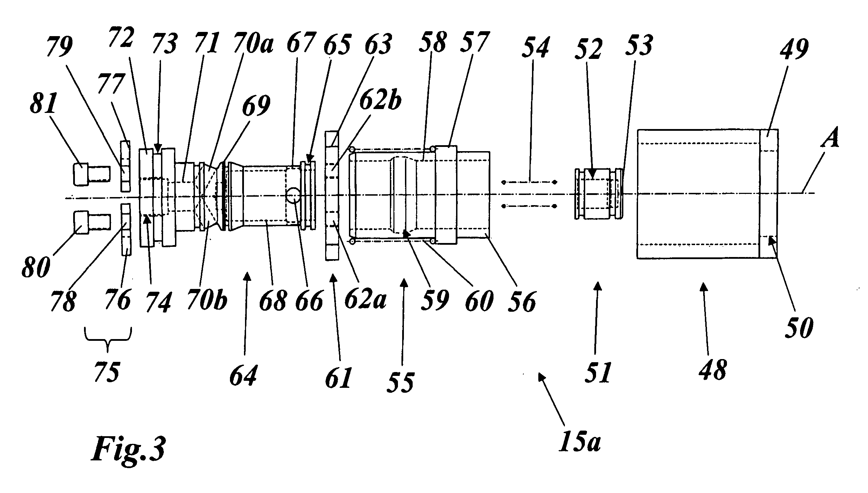

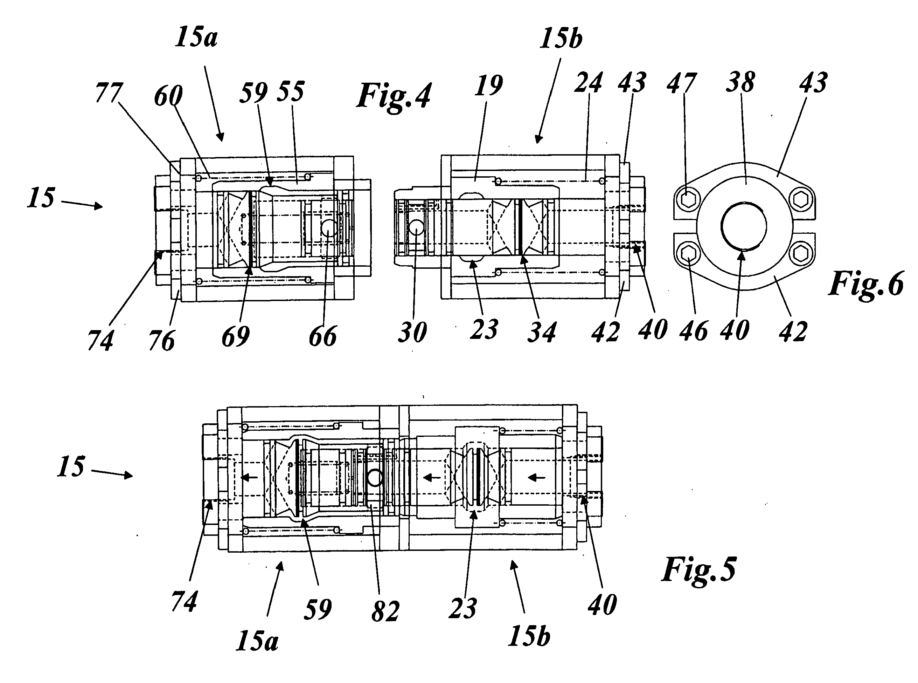

Eine der Hydraulikkupplungen 15 aus Fig. 1 ist in Fig. 4 im auseinandergesteckten Zustand und in Fig. 5 im zusammengesteckten Zustand dargestellt. Die Hydraulikkupplung 15 umfasst zwei Anschlussteile 15a und 15b, die zur Herstellung der hydraulischen Verbindung lösbar ineinander gesteckt werden können. Das Anschlussteil 15a ist als weibliches Anschlussteil ausgebildet, das Anschlussteil 15b als männliches Anschlussteil. Der innere Aufbau der beiden Anschlussteile 15a und 15b der Schnellkupplung 15 ist in Fig. 3 bzw. Fig. 2 in einer Explosionsdarstellung wiedergegeben. Das männliche Anschlussteil 15b der Fig. 2 umfasst ein hohlzylindrisches Gehäuse 16, welches auf der Stirnseite (in Steckrichtung gesehen) durch eine Stirnwand 17 abgeschlossen ist. In der Stirnwand 17 ist eine konzentrische Öffnung 18 vorgesehen, durch die hindurch im zusammengebauten Zustand der Vorderteil 20 einer Schiebemuffe 19 hindurchreicht, die im Gehäuse 16 in axialer Richtung (Achse A) verschiebbar gelagert ist (siehe rechte Seite der Fig. 4).

Die Schiebemuffe 19 hat einen Mittelteil 21 mit vergrössertem Aussendurchmesser und stützt sich mit diesem Mittelteil 21 innen an der Stirnwand 17 ab. Das Gehäuse 16 ist auf der Rückseite durch einen Gehäusedeckel 25 verschlossen, der verteilt angeordnete Gewindelöcher 26a, b zur Montage von Befestigungsmitteln 41 aufweist. Im Gehäusedeckel 25 ist eine konzentrische Öffnung 27 vorgesehen, durch die hindurch die Schiebemuffe 19 von hinten axial in das Gehäuse 16 eingeschoben werden kann. Die Schiebemuffe 19 hat eine zentrale, koaxiale Durchgangsbohrung 22, die zur (dichtenden) Aufnahme eines Anschlusskolbens 29 dient. Die Durchgangsbohrung 22 der Schiebemuffe 19 weist im Mittelteil 21 einen im Innendurchmesser erweiterten Abschnitt auf, der im Zusammenhang mit der weiter unten beschriebenen Ventilfunktion der Schiebemuffe 19 als Überströmraum 23 dient.

Der zylindrische Anschlusskolben 29 ist ortsfest im Gehäuse 16 montiert. Dazu ist er am hinteren Ende (rechts in Fig. 2) mit einem im Durchmesser erweiterten Kolbenfuss 38 ausgestattet, der eine koaxiale Ringnut 39 aufweist. Wenn der Anschlusskolben 29 mit seinem vorderen Ende in die Durchgangsbohrung 22 der Schiebemuffe 19 eingeschoben ist und zusammen mit der Schiebemuffe 19 von hinten durch die Öffnung 27 im Gehäusedeckel 25 in das Gehäuse 16 eingeführt wird, schliesst die Aussenseite des Gehäusedeckels 25 bündig mit der vorderen Seitenwand der Ringnut 39 im Kolbenfuss 38 ab. In die Ringnut 39 können dann von gegenüberliegenden Seiten halbkreisförmige Befestigungsbügel 42, 43 eingesetzt und mittels Befestigungsschrauben 46, 47 am Gehäusedeckel 25 festgeschraubt werden (Fig. 4, rechte Seite). Der Anschlusskolben 29 ist so fest mit dem Gehäusedeckel 25 und damit auch mit dem Gehäuse 16 verbunden. Zwischen der den Anschlusskolben 29 konzentrisch umgebenden Schiebemuffe 19 und dem Kolbenfuss 38 ist eine Druckfeder 24 angeordnet, die sich am Kolbenfuss 38 abstützt und die Schiebemuffe 19 mit ihrem Mittelteil 21 gegen die Stirnwand 17 drückt und vorspannt.

Der Anschlusskolben 29 hat zwei von entgegengesetzten Seiten in den Kolben hineinreichende, konzentrische Sackbohrungen 32 und 37. Die vordere (in Fig. 2 linke) Sackbohrung 32 ist vorne durch einen Verschlussstopfen 28 verschlossen. Eine Verbindung der vorderen Sackbohrung 32 zum Aussenraum wird durch eine oder mehrere radiale Bohrungen 30 hergestellt, die zwischen zwei in axialer Richtung beabstandeten, konzentrischen Dichtungen 36 auf der Aussenseite des Anschlusskolbens 29 angeordnet ist (sind). Durch die beiden Dichtungen 36 wird ein mit der vorderen Sackbohrung 32 in Verbindung stehender koaxialer Ringraum (82 in Fig. 5) gebildet, wenn der Anschlusskolben 29 in eine entsprechende Bohrung eingeschoben wird.

Im Zwischenabschnitt zwischen den beiden Sackbohrungen 32 und 37 ist auf der Aussenseite des Anschlusskolbens 29 eine umlaufende Dichtung 34 angeordnet. Auf beiden Seiten der Dichtung 34 ist der Anschlusskolben 29 in einem Abschnitt im Aussendurchmesser verjüngt. In den verjüngten Abschnitten münden Verbindungsbohrungen 33a, b und 35a, b in den Aussenraum, welche die Sackbohrungen 32 bzw. 37 mit dem Aussenraum vor bzw. hinter der Dichtung 34 verbinden. Die hintere Sackbohrung 37 geht am hinteren Ende (im Kolbenfuss 38) über in einen Anschluss mit Anschlussgewinde 40 zum Anschliessen einer Hydraulikleitung.

Das in Fig. 3 in Explosionsdarstellung und in Fig. 4 auf der linken Seite im zusammengebauten Zustand gezeigte weibliche Anschlussteil 15a hat einen Aufbau, der im Wesentlichen spiegelbildlich zu Fig. 2 ist. Auch hier ist ein hohlzylindrisches Gehäuse 48 mit einer Stirnwand 49 mit konzentrischer Öffnung 50 vorhanden, welches eine in axialer Richtung verschiebbare zweite Schiebemuffe 55 aufnimmt. Die Schiebemuffe 55 hat eine zentrale, koaxiale Durchgangsbohrung 58 zur Aufnahme eines zweiten Anschlusskolbens 64. Der zweite Anschlusskolben 64 hat ebenfalls einen Kolbenfuss 72 mit Ringnut 73, und wird mittels vergleichbarer Befestigungsmittel 75, die zwei Befestigungsbügel 76, 77 und Befestigungsschrauben 80, 81 umfassen, an einem entsprechenden Gehäusedeckel 61 festgeschraubt, der mit Gewindelöchern 62a,b für die Befestigungsschrauben 80, 81 und einer konzentrischen Öffnung 63 zum Durchschieben der zweiten Schiebemuffe 55 und des Kolbenfusses 72 ausgerüstet ist.

Die zweite Schiebemuffe 55 ragt mit einem Vorderteil 56 durch die Öffnung 50 in der Stirnwand 49 hindurch und stützt sich mit einem verdickten Mittelteil 57 an der Innenseite der Stirnwand ab. Zwischen dem Mittelteil 57 und dem Kolbenfuss 72 des zweiten Anschlusskolbens 64 ist eine Druckfeder 60 angeordnet (Fig. 4, linke Seite), die sich am Mittelteil 57 und am Kolbenfuss 72 abstützt und die Schiebemuffe 55 gegen die Stirnwand 49 drückt und vorspannt.

Auch die zweite Schiebemuffe 55 hat eine koaxiale Durchgangsbohrung 58, die sich in einem mittleren Abschnitt im Innendurchmesser zu einem Überströmraum 59 erweitert. Auch der zweite Anschlusskolben 64 weist zwei von entgegengesetzten Seiten in den Kolben hineinreichende, koaxiale Sackbohrungen 68 und 71 auf. Im Zwischenabschnitt zwischen den beiden Sackbohrungen 68 und 71 ist auf der Aussenseite des zweiten Anschlusskolbens 64 eine umlaufende Dichtung 69 angeordnet. Auf beiden Seiten der Dichtung 69 ist der Anschlusskolben 64 in einem Abschnitt im Aussendurchmesser verjüngt. In den einen verjüngten Abschnitt links von der Dichtung 69 münden Verbindungsbohrungen 70a, b in den Aussenraum, welche die linke (hintere) Sackbohrung 71 mit dem Aussenraum hinter der Dichtung 69 verbinden. Die andere Sackbohrung 68 weist einen im Innendurchmesser leicht vergrösserten Kupplungsraum 67 auf, in welchem radiale Bohrungen 66 nach aussen führen und die vordere Sackbohrung 68 mit dem Aussenraum verbinden. Am vorderen Ende des zweiten Anschlusskolbens 64 endet der rechts von der Dichtung 69 liegende verjüngte Abschnitt durch eine dichtende Ringanordnung 65. Die hintere Sackbohrung 71 geht am hinteren Ende (im Kolbenfuss 72) über in einen Anschluss mit Anschlussgewinde 74 zum Anschliessen einer Hydraulikleitung. In der vorderen Sackbohrung 68 sitzt axial verschieblich ein Verschlusskolben 51, der durch eine weitere Druckfeder 54 nach aussen zu vorgespannt ist. Zur Aufnahme der Druckfeder 54 ist in den Verschlusskolben 51 von hinten ein Sackloch 52 eingelassen, dass nach vorne zu durch eine kleine Sicherheitsbohrung 53 mit dem Aussenraum in Verbindung steht.

Im nicht zusammengesteckten Zustand (Fig. 4) ist die axiale Lage der auf den Anschlusskolben 29 und 64 angeordneten Dichtungen 34 und 69 relativ zu den Überströmräumen 23 und 59 in den Schiebemuffen 19 und 55 so, dass sich die Dichtungen 34, 69 ausserhalb der Überströmräume 23, 59 in der Durchgangsbohrung 22 bzw. 58 befinden und die Räume vor und hinter den Dichtungen 34, 69 hydraulisch voneinander trennen. Entsprechend besteht keine hydraulische Verbindung zwischen den hinteren Sackbohrungen 37, 71 und der vorderen Sackbohrung 32 (beim Anschlusskolben 29) bzw. dem Raum zwischen Dichtung 69 und Ringanordnung 65 (beim Anschlusskolben 64).

Wenn die beiden gemäss Fig. 4 vormontierten Anschlussteile 15a und 15b zusammengesteckt werden (der Endzustand ist in Fig. 5 gezeigt), werden die beiden Schiebemuffen 19 und 55 gegen den Druck der entsprechenden Druckfedern 24 bzw. 60 in axialer Richtung nach hinten in das Gehäuse 16 bzw. 48 hinein geschoben, bis die Stirnseiten der Schiebemuffen 19, 55 mit den Aussenseiten der Stirnwände 17 bzw. 49 bündig abschliessen. In dieser Endstellung (Fig. 5) befinden sich die Überströmräume 23 bzw. 59 direkt über den Dichtungen 34 bzw. 69, so dass eine hydraulische Verbindung zwischen den verjüngten Abschnitten auf beiden Seiten der Dichtungen 34, 69 hergestellt ist.

Gleichzeitig wird der Verschlusskolben 51 im linken Anschlusskolben 64 durch den rechten Anschlusskolben 29 in den linken Anschlusskolben 64 gegen den Druck der Druckfeder 54 zurückgedrückt und gibt den Kupplungsraum 67 mit den darin befindlichen radialen Bohrungen 66 frei. Der rechte Anschlusskolben 29 fährt soweit in die Sackbohrung 68 des linken Anschlusskolbens 64 ein, bis die radialen Bohrungen 30 und 66 direkt übereinander stehen, und die Dichtungen 36 den Kupplungsraum 67 seitlich begrenzen und einen koaxialen Ringraum 82 bilden, über den die beiden Anschlussteile 15a,b mit ihren Anschlusskolben 29, 64 in radialer Richtung und ohne axiale Druckkräfte Hydraulikflüssigkeit austauschen können, die über die Anschlüsse 40, 74 bzw. die daran anschliessenden Sackbohrungen 37 bzw. 71 zu- bzw. abgeführt werden.

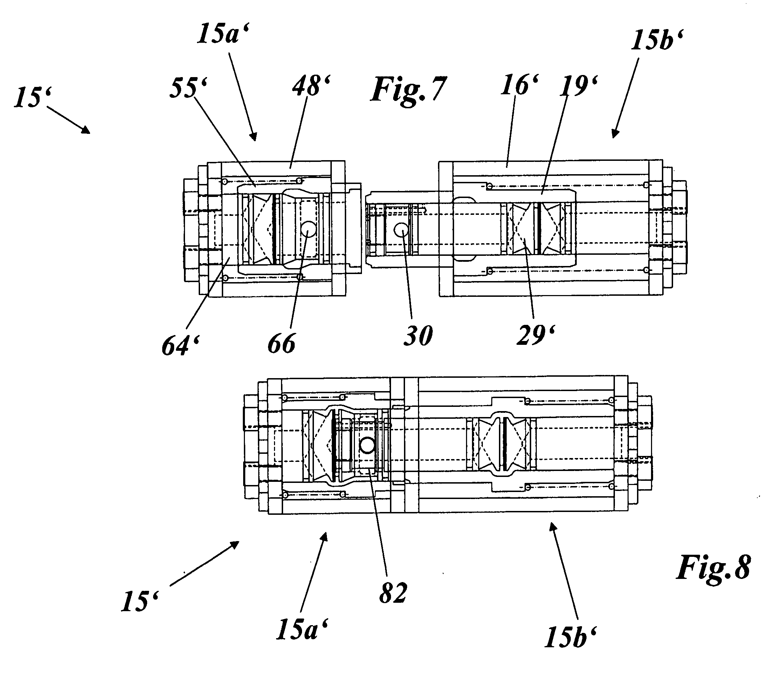

Alternativ zu dem Ausführungsbeispiel aus Fig. 2-5 kann aber auch auf einen Verschlusskolben 51 verzichtet werden. Eine solche vereinfachte Konfiguration ist beispielhaft in den Fig. 7 und 8 wiedergegeben, die den Fig. 4 und 5 entsprechen. Auch bei dieser Schnellkupplung 15' sind Anschlussteile 15a' (weiblich) und 15b' (männlich) vorhanden, die jeweils in Gehäusen 16' bzw. 48' von Schiebemuffen 19' bzw. 55' umgebene Anschlusskolben 29' bzw. 64' der bereits beschriebenen Art einschliesslich der radialen Bohrungen 30 und 66 aufweisen. Der rechte Anschlusskolben 29' fährt hier wiederum in den linken Anschlusskolben 64' ein, ohne jedoch einen Verschlusskolben verschieben zu müssen. Durch die längere Überdeckung der beiden Anschlusskolben ergibt sich dabei eine bessere Abdichtung.

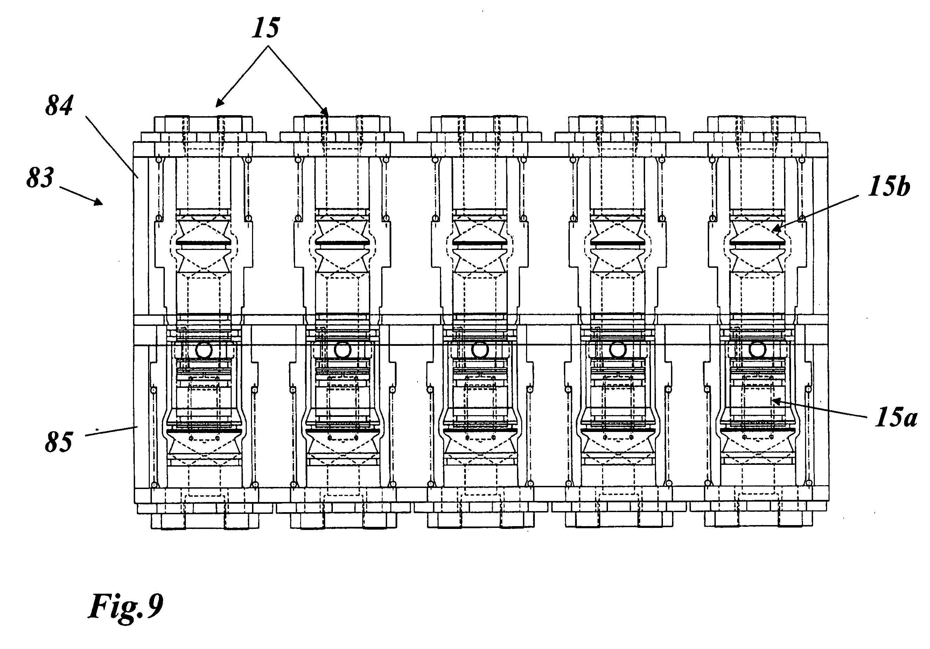

Wenn am Einsatzort mehrere Schnellkupplungen eingesetzt werden müssen, wie die drei in Fig. 1 gezeigten Schnellkupplungen 15, ist es zweckmässig, gemäss Fig. 9 ein Schnellanschlusssystem 83 in Blockbauweise vorzusehen, bei welchem am Schlauch vormontierte Anschlussteile 15a bzw. 15b einzeln in einen Block 85 bzw. 84 eingebaut werden können. Dies vereinfacht die Montage sehr bei engen Platzverhältnissen. Die Blöcke 84, 85 sind mit Fang- und Zentrierstiften ausgerüstet. Ebenfalls sind die Blöcke 84, 85 durch Federn elastisch gelagert, so dass sie sich aneinander anpassen können.

Die Schnellkupplung nach Fig. 2-5 hat zusätzlich noch folgende Sicherheitsmerkmale: Im Verschlusskolben 51 ist stirnseitig (rechts) eine kleine Sicherheitsbohrung 53 vorgesehen. Im männlichen Anschlusskolben 29 ist stirnseitig (links) eine weitere kleine Sicherheitsbohrung 31 vorhanden, welche in eine Querbohrung nach aussen mündet. In angeschlossenem Zustand wirken diese Bohrungen 31, 53 als Sicherheits-Entlastungsbohrungen:
- Sollte der vorderste Dichtring im Anschlusskolben 29 eine kleine Leckage zeigen, würde sich die unerwünschte, grosse Axialkraft aufbauen und die Blöcke 84, 85 auseinanderdrücken.
- Hinter dem Verschlusskolben 51 könnte sich in abgekuppelten Zustand, im Falle einer kleinen Leckage am hinteren Dichtring (links) eine Ölmenge ansammeln, welche in diesem Fall durch die Sicherheitsbohrung 53 entweichen kann. Beim Anschliessen wird dieser Verschlusskolben 51 durch den Anschlusskolben 29 hineingedrückt, wobei sich der Raum hinter dem Verschlusskolben 51 verkleinert. Ein grosses Ölvolumen in diesem Raum könnte jetzt durch die oben beschriebenen Sicherheits-Entlastungsbohrung entweichen.
- Durch das Spiel, welches der Anschlusskolben 29 in der Schiebemuffe 19 hat, ist ein Abfluss des verdrängten Öls nach aussen möglich.
- Es ist zu bedenken, dass es sich dabei um eine theoretische Leckage mit kleiner Ölmenge handelt.

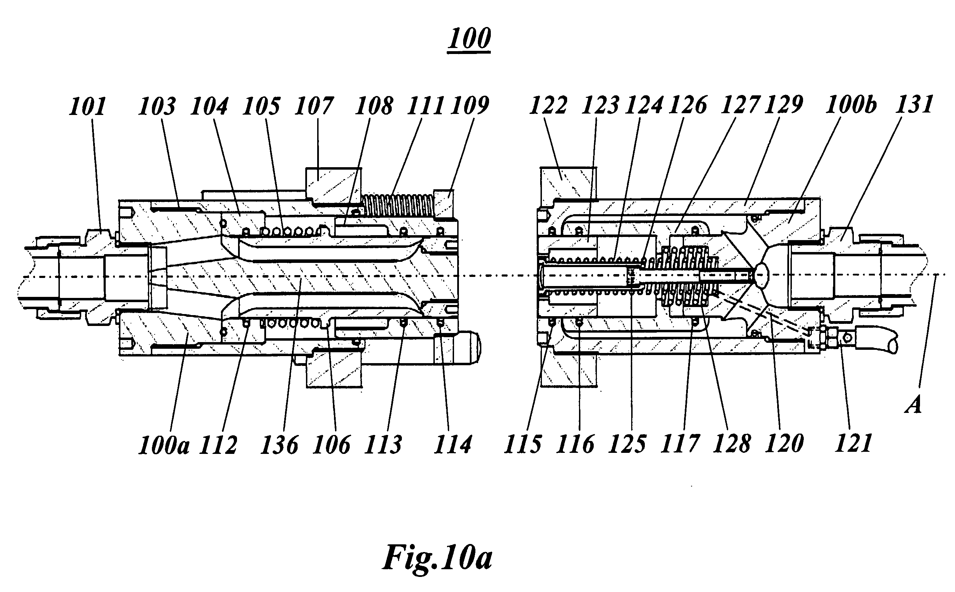

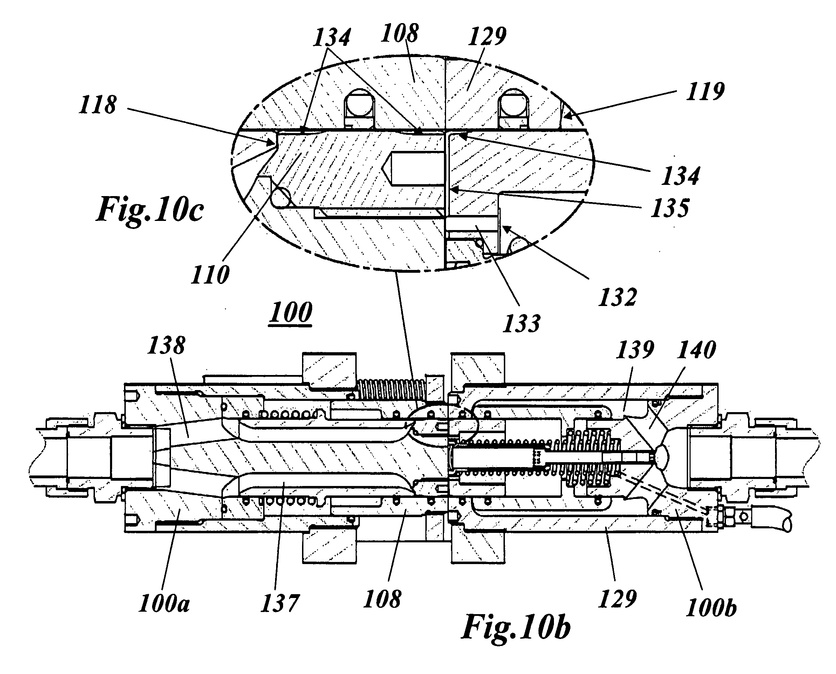

Ein weiteres, besonders vorteilhaftes Ausführungsbeispiel für eine Schnellkupplung nach der Erfindung ist in den Fig. 10a-e in verschiedenen fortschreitenden Phasen des Kupplungsvorgangs wiedergegeben, wobei die Fig. 10c einen vergrösserten Ausschnitt aus der Fig. 10b wiedergibt. Die Schnellkupplung 100 der Fig. 10a-e umfasst zwei Anschlussteile, nämlich ein männliches Anschlussteil 100a und ein darauf abgestimmtes weibliches Anschlussteil 100b.

Das männliche Anschlussteil 100a basiert auf einem Kupplungskörper mit einer sich in Kupplungsrichtung erstreckenden Kolbenstange 136, an deren vorderem Ende ein Anschlusskolben 110 angeordnet ist (Fig. 10c). Die Kolbenstange 136 ist mit Abstand aussen konzentrisch von einem Rohr 103 umgeben, welches mit dem Kupplungskörper 100a verschraubt ist. Innerhalb des Rohres 103 ist konzentrisch ein Dichtungsträgerring 104 untergebracht, in dem eine innere Schiebemuffe 106 gegen den Druck einer Feder 105 in axialer Richtung nach hinten verschiebbar gelagert ist und durch eine im Dichtungsträgerring 104 untergebrachte Dichtung 112 nach aussen abgedichtet wird. Im ungekuppelten Zustand stösst die innere Schiebemuffe 106 mit einer vorderen Dichtkante 118 (Fig. 10c) an die Rückseite des Anschlusskolbens 110 und bildet dort eine Dichtstelle, bei der Metall auf Metall trifft.

Zwischen dem Rohr 103 und der inneren Schiebemuffe 106 ist konzentrisch eine äussere Schiebemuffe 108 in axialer Richtung gegenüber dem Rohr 103, der inneren Schiebemuffe 106 und dem Anschlusskolben 110 gegen den Druck einer Feder 111 verschiebbar gelagert und mittels der Dichtungen 113 und 114 nach innen gegen die innere Schiebemuffe 106 und den Anschlusskolben 110 abgedichtet. Die Feder 111 ist seitlich aussen angeordnet und wird über eine am vorderen Ende der äusseren Schiebemuffe 108 fest angebrachte, die äussere Schiebemuffe 108 konzentrisch umgebende Führungsplatte 109 beaufschlagt. Zwischen der Kolbenstange 136 und der inneren Schiebemuffe 106 ist ein koaxialer Ringraum 137 ausgebildet, der über Verbindungsbohrungen 138 mit der Anschlussleitung 101 auf männlicher Seite in Verbindung steht (Fig. 10b). Das männliche Anschlussteil 100a ist mit dem Rohr 103 fest in eine quer zur Kupplungsrichtung liegende Trägerplatte 107 eingeschraubt.

Das weibliche Anschlussteil 100b basiert auf einem Kupplungskörper, der eine gegen den Druck einer Feder 128 in axialer Richtung verschiebbar gelagerte Schiebemuffe 127 trägt. Die Schiebemuffe 127 ist mit Abstand aussen konzentrisch von einem Rohr 129 umgeben, das mit dem hinteren Ende auf den Kupplungskörper 100b aufgeschraubt und mit dem vorderen Ende in eine Trägerplatte 122 eingeschraubt ist. Das Rohr 129 verengt sich am vorderen Ende. Im ungekuppelten Zustand stösst die Schiebemuffe 127 mit einer Dichtkante 119 (Fig. 10c) an die Rückseite der Verengung des Rohres 129 und bildet dort ebenfalls eine Dichtstelle, bei der Metall auf Metall trifft. In der Schiebemuffe 127 und dem verengten vorderen Teil des Rohres 129 ist gegen den Druck einer Feder 124 in axialer Richtung verschiebbar ein Verschlusskolben 123 gelagert und mittels einer Distanzbüchse 126 und einer Halteschraube 125 so am Kupplungskörper 100b gehalten, dass er im ungekuppelten Zustand an der Vorderseite bündig mit dem vorderen Ende des Rohres 129 abschliesst. Der Verschlusskolben 123 ist durch Dichtungen 115 und 116 nach aussen gegen den verengten Abschnitt des Rohres 129 bzw. die Schiebemuffe 127 abgedichtet. Zwischen der Schiebemuffe 127 und dem Rohr 129 ist ein koaxialer Ringraum 139 ausgebildet, der über Verbindungsbohrungen 140 mit der Anschlussleitung 131 auf weiblicher Seite in Verbindung steht (Fig. 10b).

Wesentliches Merkmal ist auch bei diesem Ausführungsbeispiel, dass bei Beaufschlagung der gekuppelten Verbindung durch hydraulischen Druck keine axiale Kraft erzeugt wird. Dies geschieht dadurch, dass im männlichen Schnellkupplungsteil bzw. Anschlussteil 100a ein Anschlusskolben 110 an einer Kolbenstange 136 befestigt ist, welcher beim Kuppeln mit dem weiblichen Schnellkupplungsteil bzw. Anschlussteil 100b in denselben hineinragt.

Der weibliche Schnellkupplungsteil 100b ist derart ausgeführt, dass durch die Stirnseite des Anschlusskolbens 110 des männlichen Schnellkupplungsteils 100a beim Kupplungsvorgang ein Verschlusskolben 123 in einen druckfreien Raum geschoben wird. Bei dieser Anordnung wird die Kraft, welche durch die Ringfläche des Anschlusskolbens 110, multipliziert mit dem hydraulischen Druck, entsteht, vollständig durch die oben erwähnte Kolbenstange 136 aufgenommen. Um mit Sicherheit zu verhindern, dass sich die erwähnte Kraft, welche die Halteplatten bzw. Trägerplatten 107, 122 und die dazugehörenden Befestigungen an den Maschinenteilen schwer beschädigen könnte, aufbauen kann, ist eine an eine Leckölbohrung 120 angeschlossene Leckölleitung 121 vorgesehen, welche eine eventuelle, kleine Leckage an den Dichtungen 116, 117 ableiten kann und zurück in den Tank führt.

Gleichzeitig wird die Pumpenwirkung des Verschlusskolbens 123 zum Absaugen eines allfälligen Lecköls beim Abkuppeln verwendet. Zu diesem Zweck sind im Verschlusskolben 123 Mittel zur Erlangung der Wirkung eines Rückschlagventils eingebaut. Bei einer bevorzugten Ausführung dieser Mittel ist eine dünne Ventilscheibe 132 vorgesehen. Diese verschliesst vier im Verschlusskolben 123 angebrachte Ventilbohrungen 133 von innen und lässt kein Öl austreten. Befindet sich vor dem Ankuppeln Öl hinter dieser Ventilscheibe 132, wird dieses durch das Rückschlagventil im Nippel der Leckölleitung 121 in den Tank gedrückt.

Beim Abkuppeln des Systems entsteht im Raum hinter dem Verschlusskolben 123 ein Vakuum, wodurch die Ventilscheibe 132 durch den statischen Umgebungsdruck nach innen gedrückt wird. Dabei kann eine kleine Ölmenge, welche sich durch das Überfahren der Dichtringe beim Abkuppeln auf den Stirnseiten von Anschlusskolben 110 und Verschlusskolben 123 sammelt, durch die Ventilbohrungen 133 abgesaugt werden.

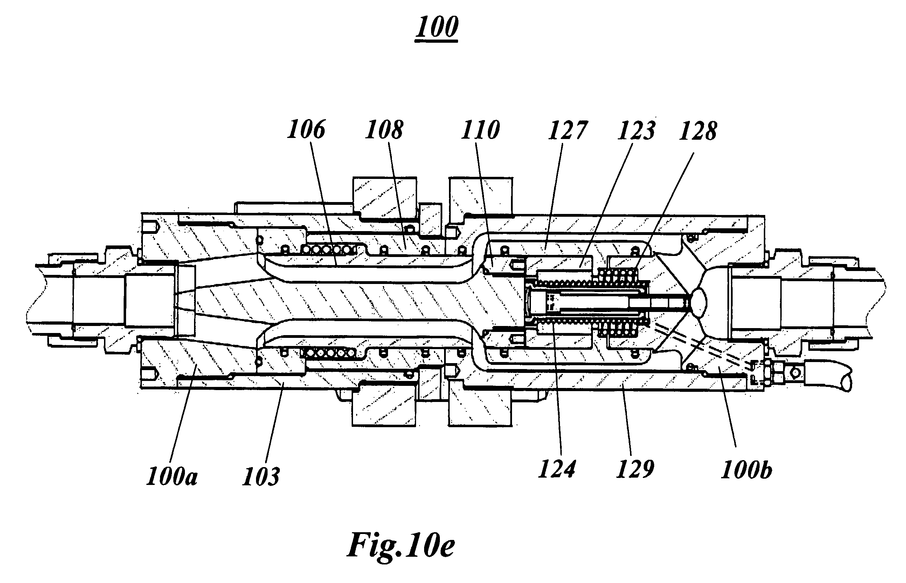

Im angeschlossenen Zustand (Fig. 10e) entsteht für den grossen Ölstrom ein strömungsgünstiger Übergang vom männlichen in den weiblichen Schnellkupplungsteil 100a bzw. 100b oder umgekehrt. Der Strömungsübergang verläuft im Wesentlichen radial, wobei die Schiebemuffen 106 und 127 und der Anschlusskolben 110 mit Kolbenstange 136 vom Öl koaxial umflossen, resp. durchflossen werden. Umlaufende Dichtungen 112,..,117 mit bestimmten, kleinen Durchmesserdifferenzen lassen an den verschiebbaren Muffen 106, 127 gezielt kleine axiale Kräfte entstehen, welche die Federn 105, 128 beim Schliessvorgang unterstützen. Gleichzeitig verhindern sie, dass das Öl nach aussen resp. an dem Anschlusskolben 110 entlang, auf dessen Stirnseite gelangen kann.

Im abgekuppelten, geschlossenen Zustand (Fig. 10a) werden die Schliesskräfte, mit welchen die innere Schiebemuffe 106 auf den Anschlusskolben 110 und die Schiebemuffe 127 gegen das Rohr 129 auf der weiblichen Seite wirken, durch einen eventuellen hydraulischen Restdruck zusätzlich verstärkt. Dies geschieht dadurch, dass sich angearbeitete metallische Dichtkanten 118, 119 (Fig. 10c) im Durchmesser von den Dichtungen 112, 117 derart unterscheiden, dass kleine Ringflächen entstehen. Beide Kupplungsteile sind auf diese Weise bereits relativ dicht geschlossen. Durch die Dichtungen 112,..,117 werden die Kupplungsteile 100a, 100b definitiv dicht abgeschlossen.

Um die Dichtungen 114, 115, 116 beim Kupplungsvorgang unter hydraulischem Druck nicht zu beschädigen, sind am Anschlusskolben 110 und am Verschlusskolben 123 kleine Entlastungsnuten 134 (Fig. 10c) eingearbeitet. Durch diese Entlastungsnuten 134 kann eine geringe Ölmenge abgeleitet werden, um die hydraulische Spannung zwischen den Dichtungen 113 und 114 sowie 115 und 116 abzuleiten, bevor die Dichtungen 114, 115, 116 die Trennstellen zwischen dem Anschlusskolben 110 und der inneren Schiebemuffe 106 einerseits und dem Anschlusskolben 110 und dem Verschlusskolben 123 andererseits überfahren. Die dabei ausgetretene, kleine Ölmenge sammelt sich an den Stirnseiten des Anschlusskolbens 110 und des Verschlusskolbens 123, in welchen stirnseitig kleine Nuten 135 eingearbeitet sind, welche zu den Ventilbohrungen 133 führen. Diese Ölmenge wird beim Abkuppeln durch das bereits beschriebene Vakuum abgesaugt.

Durch diese Bauweise ist es möglich, unter Druck stehende Leitungen anzukuppeln, ohne dass grosse Kräfte notwendig sind.

### Ankuppeln unter Druck stehender Schnellkupplungsteile:

Unter Druck stehende Schnellkupplungen nach vorliegender Erfindung erzeugen keine axialen Kräfte, welche die beiden Kupplungsteile auseinanderdrücken. Entsprechend ist beim Ankuppeln keine grosse Kraft zu überwinden. Lediglich die Kräfte aller Federn drücken die Teile auseinander und eine erhöhte Reibung der Dichtungen unter hydraulischer Last ist zu überwinden. Zusätzlich sind die oben beschriebenen kleinen Kräfte, erzeugt durch die Ringflächen, multipliziert mit dem hydraulischen Druck, zu überwinden.

Beim Kupplungsvorgang gemäss Fig. 10a-e bewegen sich in einem ersten Schritt (Fig. 10b und 10c) die zwei zu kuppelnden Schnellkupplungsteile 100a, 100b gegeneinander, sodass der männliche Anschlussteil 100a mit dem Anschlusskolben 110 auf den Verschlusskolben 123 im weiblichen Anschlussteil 100b trifft.

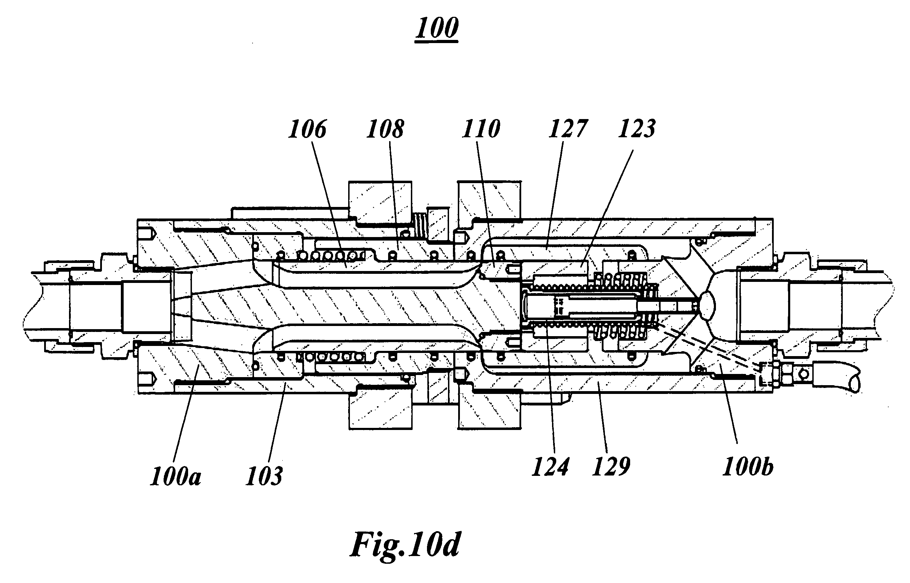

In Fig. 10d schiebt der männliche Anschlussteil 100a mit dem Anschlusskolben 110 den Verschlusskolben 123 bis zum Anschlag in die Schiebemuffe 127 ein. In dieser Position sind die Teile dicht angeschlossen. Der Ölfluss ist durch die metallischen Dichtkanten 118, 119 noch nicht freigegeben. Im männlichen Kupplungsteil 100a wird die innere Schiebemuffe 106 durch die Feder 105 für die innere Schiebemuffe gegen die Innenseite des Kolbens 110 am männlichen Anschlussteil 100a gedrückt. Und im weiblichen Schnellkupplungsteil 100b wird die dortige Schiebemuffe 127 durch die Feder 128 für Schiebemuffe gegen die entsprechend geformte Innenseite des Rohres 129 der weiblichen Seite gedrückt. Die Dichtungen 114, 115, 116 wurden dabei dank der Entlastungsnuten 134 ohne Belastung durch hydraulischen Druck überfahren. Beim Anschliessen unter Druck wird der Durchgang erst freigegeben, wenn alle Dichtungen vollständig überdeckt sind. Andererseits wird ein bestehender Ölstrom durch die metallischen Dichtkanten 118, 119 gestoppt, und die Dichtungen 114, 115, 116 werden erst überfahren, wenn diese nicht mehr durch einen plötzlich zu stoppenden Ölstrom beschädigt werden können.

In Fig. 10e ist eine gänzlich zusammengefahrene Schnellkupplung 100 dargestellt. Beide Schiebemuffen 106, 127 sind dabei vollständig eingeschoben und geben den ganzen Querschnitt frei.

Insgesamt hat die Schnellkupplung nach der Erfindung die folgenden Merkmale:
- Schnellanschlusssystem für Hochdruckhydraulik unter Druck koppelbar.
- Schnellanschlusssystem ohne nach aussen wirkende Axialkräfte bei Druckbeaufschlagung. Dies geschieht durch die seitliche Anordnung der Öl-Eintritts- resp. Austrittsbohrungen.
- Umlaufende Dichtungen verhindern, dass das Öl dem Anschlusskolben entlang auf dessen Stirnseite gelangen kann. In abgekuppeltem Zustand verhindern Schiebemuffen das Austreten von Öl.
- Durch diese Bauweise ist es möglich, unter Druck stehende Leitungen anresp. abzukuppeln, ohne dass grosse Kräfte notwendig sind.
- Schnellkupplung mit durchgehend grossen Querschnitten, entsprechend der Nenngrösse, um Bremswirkungen und Wärmeentwicklung zu verhindern.
- Schnellkupplung, welche strömungstechnisch vorteilhaft ausgelegt ist, unter anderem weil sich keine Federn in den durchströmten Räumen befinden.
- Schnellkupplung mit konstruktiven Massnahmen, welche verhindern, dass die Dichtungen beim An- oder Abkuppeln durch den Ölstrom unter Druck beschädigt werden. Dies geschieht dadurch, dass ein eventueller Ölstrom unter Druck durch metallische Abschlüsse zurückgehalten wird. Die Dichtungen werden von den Verschluss- und Anschlussteilen nur mit minimalem Druck überfahren.
- Schnellkupplung speziell geeignet für den Einsatz in Platinen für Vielfachkupplungen, auch mit verschiedenen Querschnitten.
- Schnellkupplung für automatischen Kupplungsvorgang.
- Schnellkupplung mit Verschlussteilen, welche nach dem Abkuppeln ein Auslaufen von Restölmengen verhindern.
- Schnellkupplung besonders geeignet für kombinierte Mehrfachanwendung in Trägerplatten.

### BEZUGSZEICHENLISTE

- 10: Arm
- 11: Verlängerung
- 12: Verbindungsstelle
- 13,14: Hydraulikleitung
- 15,15': Schnellkupplung
- 15a,b: Anschlussteil
- 15a',15b': Anschlussteil
- 16,16',48,48': Gehäuse
- 17,49: Stirnwand
- 18,50: Öffnung
- 19,19',55,55': Schiebemuffe
- 20,56: Vorderteil
- 21,57: Mittelteil
- 22,58: Durchgangsbohrung
- 23,59: Überströmraum
- 24,60: Druckfeder
- 25,61: Gehäusedeckel
- 26a,b;62a,b: Gewindeloch (seitlich)
- 27,63: Öffnung
- 28: Verschlussstopfen
- 29,29',64,64': Anschlusskolben
- 30,66: Bohrung (radial)
- 31: Sicherheitsbohrung
- 32,37,68,71: Sackbohrung
- 33a,b;70a,b: Verbindungsbohrung
- 34,69: Dichtung (umlaufend)
- 35a,b: Verbindungsbohrung
- 36: Dichtung
- 38,72: Kolbenfuss
- 39,73: Ringnut
- 40,74: Anschlussgewinde
- 41,75: Befestigungsmittel
- 42,43;76,77: Befestigungsbügel
- 44,45;78,79: Befestigungsloch
- 46,47;80,81: Befestigungsschraube
- 51: Verschlusskolben
- 52: Sackloch
- 53: Sicherheitsbohrung
- 54: Druckfeder
- 65: Ringanordnung
- 67: Kupplungsraum
- 82: Ringraum (koaxial)
- 83: Schnellanschlusssystem
- 84,85: Block
- 100: Schnellkupplung
- 101: Anschlussleitung
- 100a: Männlicher Anschlussteil bzw. Schnellkupplungsteil (mit Kolben)
- 103: Rohr männliche Seite
- 104: Dichtringsträgerring
- 105: Feder (für innere Schiebemuffe)
- 106: Innere Schiebemuffe
- 107: Trägerplatte (männliche Seite)
- 108: Äussere Schiebemuffe
- 109: Führungsplatte
- 110: Anschlusskolben
- 111: Feder (für äussere Schiebemuffe)
- 112: Hintere Dichtung (für innere Schiebemuffe)
- 113: Hintere Dichtung (für äussere Schiebemuffe)
- 114: Vordere Dichtung (für äussere Schiebemuffe)
- 115,116: Anschlussdichtung
- 117: Hintere Dichtung (für Schiebemuffe)
- 118: Metallische Dichtkante (männliche Seite)
- 119: Metallische Dichtkante (weibliche Seite)
- 120: Leckölbohrung
- 121: Leckölleitung
- 122: Trägerplatte (weibliche Seite)
- 123: Verschlusskolben
- 124: Feder (für Verschlusskolben)
- 125: Halteschraube
- 126: Distanzbüchse
- 127: Schiebemuffe
- 128: Feder (für Schiebemuffe)
- 129: Rohr (weibliche Seite)
- 100b: Weiblicher Anschlussteil bzw. Schnellkupplungsteil
- 131: Anschlussleitung
- 132: Ventilscheibe
- 133: Ventilbohrung
- 134: Entlastungsnut
- 135: Nut
- 136: Kolbenstange
- 137,139: koaxialer Ringraum
- 138,140: Verbindungsbohrung
- A: Kupplungsachse

## Patentansprüche

1. Schnellkupplung (15, 15'; 100) für die Verbindung von Hydraulikleitungen, insbesondere bei Erdbewegungsmaschinen sowie deren auswechselbaren Ausbaugeräten und Werkzeugen, welche Schnellkupplung (15, 15'; 100) ein erstes und zweites Anschlussteil (15a, 15a' bzw. 15b, 15b' bzw. 100a, 100b) umfasst, die entlang einer Kupplungsachse (A) zur Übertragung einer Hydraulikflüssigkeit lösbar gekuppelt werden können, **dadurch gekennzeichnet, dass** in gekuppeltem Zustand die zu übertragende Hydraulikflüssigkeit quer zur Kupplungsachse (A) aus dem einen Anschlussteil (15a, 15a', 100a bzw. 15b, 15b', 100b) austritt und direkt quer zur Kupplungsachse (A) in das andere Anschlussteil (15b, 15b', 100b bzw. 15a, 15a', 100a) eintritt.

2. Schnellkupplung nach Anspruch 1, **dadurch gekennzeichnet, dass** in gekuppeltem Zustand zwischen den beiden Anschlussteilen (15a, 15b; 15a', 15b') ein in axialer Richtung zu beiden Seiten abgedichteter, koaxialer Ringraum (82) zur Übertragung der Hydraulikflüssigkeit ausgebildet wird, und dass die beiden Anschlussteile (15a, 15b; 15a', 15b') durch radiale Bohrungen (30, 66) mit dem Ringraum (82) Hydraulikflüssigkeit austauschen können.

3. Schnellkupplung nach Anspruch 2, **dadurch gekennzeichnet, dass** die beiden Anschlussteile (15a, 15b; 15a', 15b') ein weibliches Anschlussteil (15a, 15a') und ein männliches Anschlussteil (15b, 15b') umfassen, dass das männliche Anschlussteil (15b, 15b') einen ersten koaxialen Anschlusskolben (29, 29') mit einer ersten koaxialen Bohrung (32) aufweist, dass das weibliche Anschlussteil (15a, 15a') einen zweiten koaxialen Anschlusskolben (64, 64') mit einer zweiten koaxialen Bohrung (68) zur Aufnahme des ersten Anschlusskolbens (29, 29') aufweist, dass der koaxiale Ringraum (82) beim Einschieben des ersten Anschlusskolbens (29, 29') in die zweite koaxiale Bohrung (68) des zweiten Anschlusskolbens (64, 64') gebildet wird, und dass eine erste radiale Bohrung (30) im ersten Anschlusskolben (29, 29') von der ersten koaxialen Bohrung (32) in den koaxialen Ringraum (82) und eine zweite radiale Bohrung (66) im zweiten Anschlusskolben (64, 64') vom koaxialen Ringraum (82) in den umgebenden Aussenraum des zweiten Anschlusskolbens (64, 64') führt.

4. Schnellkupplung nach Anspruch 3, **dadurch gekennzeichnet, dass** in den beiden Anschlussteilen (15a, 15b; 15a', 15b') jeweils ein aussen liegender Anschluss (40, 74) für die Hydraulikflüssigkeit angeordnet und ein vorzugsweise durch den Steckvorgang betätigbarer Ventilmechanismus (19, 22, 23, 24, 32, 33a, 33b, 34, 35a, 35b, 37 bzw. 55, 58, 59, 60, 68, 69, 70a, 70b, 71) vorgesehen ist, welcher die hydraulische Verbindung zwischen dem jeweiligen Anschluss (40, 74) und der ersten koaxialen Bohrung (32) bzw. dem umgebenden Aussenraum des zweiten Anschlusskolbens (64, 64') unterbricht, wenn die Anschlussteile (15a, 15b; 15a', 15b') auseinander gezogen sind, und die hydraulische Verbindung zwischen dem jeweiligen Anschluss (40, 74) und der ersten koaxialen Bohrung (32) bzw. dem umgebenden Aussenraum des zweiten Anschlusskolbens (64, 64') herstellt, wenn die Anschlussteile (15a, 15b; 15a', 1 5b') ineinander gesteckt sind.

5. Schnellkupplung nach Anspruch 4, **dadurch gekennzeichnet, dass** der Ventilmechanismus (19, 22, 23, 24, 32, 33a, 33b, 34, 35a, 35b, 37 bzw. 55, 58, 59, 60, 68, 69, 70a, 70b, 71) jeweils eine relativ zum Anschlusskolben (29, 29' bzw. 64, 64') in axialer Richtung bewegliche Schiebemuffe (19, 19' bzw. 55, 55') umfasst, welche den Anschlusskolben (29, 29' bzw. 64, 64') konzentrisch umgibt und eine Durchgangsbohrung (22 bzw. 58) mit einem in der Mitte angeordneten Überströmraum (23 bzw. 59) mit vergrössertem Innendurchmesser aufweist, wobei der Anschlusskolben (29, 29' bzw. 64, 64') die Durchgangsbohrung (22 bzw. 58) mittels einer umlaufenden Dichtung (34 bzw. 69) in zwei voneinander dichtend getrennte Abschnitte unterteilt, die nur dann miteinander in Verbindung stehen, wenn sich bei einer bestimmten relativen Position von Anschlusskolben (29, 29' bzw. 64, 64') und Schiebemuffe (19, 19' bzw. 55, 55') die umlaufende Dichtung (34 bzw. 69) im Überströmraum (23 bzw. 59) befindet.

6. Schnellkupplung nach Anspruch 5, **dadurch gekennzeichnet, dass** jedes Anschlussteil (15a, 15b; 15a', 15b') ein Gehäuse (16, 16' bzw. 48, 48') aufweist, dass die Anschlusskolben (29, 29' bzw. 64, 64') jeweils fest mit dem Gehäuse verbunden sind, dass die Schiebemuffen (19, 19' bzw. 55, 55') relativ zum Gehäuse (16, 16' bzw. 48, 48') in axialer Richtung beweglich sind und dass die Schiebemuffen (19, 19' bzw. 55, 55') gegen den Druck einer Druckfeder (24 bzw. 60) entgegen der Einsteckrichtung zurückschiebbar sind.

7. Schnellkupplung nach einem der Ansprüche 3 bis 6, **dadurch gekennzeichnet, dass** in der zweiten koaxialen Bohrung (68) des zweiten Anschlusskolbens (64) ein Verschlusskolben (51) angeordnet ist, welcher bei auseinander gezogenen Anschlussteilen (15a, b) die zweite koaxiale Bohrung (68) nach aussen abschliesst und beim Ineinanderstecken der Anschlussteile (15a, b) vom ersten Anschlusskolben (29) gegen den Druck einer Druckfeder (54) in die zweite koaxiale Bohrung (68) zurückgeschoben wird.

8. Schnellkupplung nach Anspruch 6, **dadurch gekennzeichnet, dass** die Anschlüsse (40 bzw. 74) an den hinteren Enden der Anschlusskolben (29, 29' bzw. 64, 64') angeordnet sind, und dass die Anschlusskolben (29, 29' bzw. 64, 64') bei angeschlossener Hydraulikleitung von hinten in das Gehäuse (16, 16' bzw. 48, 48') einschiebbar und am Gehäuse (16, 16' bzw. 48, 48') befestigbar sind.

9. Schnellkupplung nach Anspruch 1, **dadurch gekennzeichnet, dass** im ersten Anschlussteil (100a) ein sich in Richtung der Kupplungsachse (A) erstreckender erster Raum (137) für die Hydraulikflüssigkeit vorgesehen ist, welcher am einen Ende mit einer Anschlussleitung (101) des ersten Anschlussteils (100a) in Verbindung steht, dass im zweiten Anschlussteil (100b) ein sich in Richtung der Kupplungsachse (A) erstreckender zweiter Raum (139) für die Hydraulikflüssigkeit vorgesehen ist, welcher am einen Ende mit einer Anschlussleitung (131) des zweiten Anschlussteils (100b) in Verbindung steht, dass der erste Raum (137) am anderen Ende durch einen ersten Verschlussmechanismus (106, 110, 118) verschliessbar ist, welcher den ersten Raum (137) im ausgekuppelten Zustand dichtend verschliesst und im gekuppelten Zustand öffnet, dass der zweite Raum (139) am anderen Ende durch einen zweiten Verschlussmechanismus (119, 127, 129) verschliessbar ist, welcher den zweiten Raum (139) im ausgekuppelten Zustand dichtend verschliesst und im gekuppelten Zustand öffnet, dass die beiden Räume (137, 139) und Verschlussmechanismen (106, 110, 118 bzw. 119, 127, 129) so ausgebildet sind, dass im gekuppelten Zustand die Hydraulikflüssigkeit zwischen den beiden Räumen (137, 139) im Wesentlichen in radialer Richtung fliesst, und dass in den beiden Verschlussmechanismen (106, 110, 118 bzw. 119, 127, 129) zum Verschliessen der Räume (137, 139) Dichtstellen (118, 119) ausgebildet sind, in welchen Metall dichtend auf Metall liegt.

10. Schnellkupplung nach Anspruch 9, **dadurch gekennzeichnet, dass** die beiden Räume (137, 139) als konzentrisch zur Kupplungsachse (A) angeordnete Ringräume ausgebildet sind.

11. Schnellkupplung nach Anspruch 10, **dadurch gekennzeichnet, dass** der Ringraum (137) im ersten Anschlussteil (100a) zwischen einer zentralen axialen Kolbenstange (136) und einer die Kolbenstange (136) im Abstand konzentrisch umgebenden inneren Schiebemuffe (106) ausgebildet ist und der zugehörige Verschlussmechanismus durch die innere Schiebemuffe (106) und einen am vorderen Ende der Kolbenstange angeordneten Anschlusskolben (110) gebildet wird, dass der Ringraum (139) im zweiten Anschlussteil (100b) zwischen einer Schiebemuffe (127) und einem die Schiebemuffe (127) im Abstand konzentrisch umgebenden äusseren Rohr (129) ausgebildet ist und der zugehörige Verschlussmechanismus durch die Schiebemuffe (127) und das am vorderen Ende sich verjüngende äussere Rohr (129) gebildet wird, wobei die innere Schiebemuffe (106) und der Anschlusskolben (110) im ersten Anschlussteil (100a) denselben Aussendurchmesser aufweisen, und das sich verjüngende Ende des äusseren Rohres und die Schiebemuffe (127) im zweiten Anschlussteil (100b) denselben Innendurchmesser aufweisen, und dass der Aussendurchmesser im wesentlichen gleich dem Innendurchmesser ist, so dass beim Kuppeln die innere Schiebemuffe (106) und der Anschlusskolben (110) in das sich verjüngende Ende des äusseren Rohres (129) und die Schiebemuffe (127) einfahren können.

12. Schnellkupplung nach Anspruch 11, **dadurch gekennzeichnet, dass** der Verschlussmechanismus im ersten Anschlussteil (100a) beim Kuppeln dadurch geöffnet wird, dass die innere Schiebemuffe (106) gegen den Druck einer Feder (105) relativ zum ortsfesten Anschlusskolben (110) nach hinten geschoben wird, dass der Verschlussmechanismus im zweiten Anschlussteil (100b) beim Kuppeln dadurch geöffnet wird, dass die Schiebemuffe (127) gegen den Druck einer Feder (128) relativ zum ortsfesten, sich verjüngenden Ende des äusseren Rohres (129) nach hinten geschoben wird, dass zum Verschieben der Schiebemuffe (106) im ersten Anschlussteil (100a) eine die innere Schiebemuffe (106) konzentrisch umschliessende, in axialer Richtung verschiebbare und vom äusseren Rohr (129) des zweiten Anschlussteils (100b) betätigbare äussere Schiebemuffe (108) vorgesehen ist, und dass zum Verschieben der Schiebemuffe (127) im zweiten Anschlussteil (100b) ein von der Schiebemuffe (127) konzentrisch umschlossener, in axialer Richtung verschiebbarer und von dem Anschlusskolben des ersten Anschlussteils (100a) betätigbarer Verschlusskolben (123) vorgesehen ist.

13. Schnellkupplung nach Anspruch 12, **dadurch gekennzeichnet, dass** im ersten Anschlussteil (100a) zwischen der äusseren Schiebemuffe (108) und dem Anschlusskolben (110), und im zweiten Anschlussteil zwischen dem Verschlusskolben (123) und dem sich verjüngenden Ende des äusseren Rohres (129) und der Schiebemuffe (127) Dichtungen (114, 115, 116) angeordnet sind, und dass die Verschlussmechanismen (106, 110, 118 bzw. 119, 127, 129) nur dann öffnen, wenn die Dichtungen (114, 115, 116) vollständig überdeckt sind.

14. Schnellkupplung nach Anspruch 13, **dadurch gekennzeichnet, dass** im Verschlusskolben (123) Mittel zur Erlangung der Wirkung eines Rückschlagventils eingebaut sind, welche Mittel insbesondere eine dünne Ventilscheibe (132) umfassen, die im Verschlusskolben (123) angebrachte Ventilbohrungen (133) von innen öldicht verschliesst, und dass am Anschlusskolben (110) und am Verschlusskolben (123) kleine Entlastungsnuten (134) und in den Verschlusskolben (123) stirnseitig kleine Nuten (135) eingearbeitet sind.

15. Schnellanschlusssystem für die Verbindung von Hydraulikleitungen, insbesondere bei Erdbewegungsmaschinen sowie deren auswechselbaren Ausbaugeräten und Werkzeugen, **dadurch gekennzeichnet, dass** mehrere Schnellkupplungen nach einem der Ansprüche 1 bis 14 in paralleler Anordnung in einem Block (84, 85) bzw. auf gemeinsamen Trägerplatten (107, 122) zusammengefasst sind.

## Claims

1. A quick connect coupling (15, 15'; 100) for connecting hydraulic lines, especially in earth moving machines, and the interchangeable attachments and tools thereof, which quick connect coupling (15, 15', 100) comprises a first and second connecting part (15a, 15a' and 15b, 15b' and 100a, 100b), which can be releasably coupled along a coupling axis (A) for the transfer of a hydraulic fluid, **characterized in that** in the coupled state the hydraulic fluid to be transferred emerges from one connecting part (15a, 15a', 100a and 15b, 15b', 100b) at a right angle to the coupling axis (A) and directly enters the other connecting part (15b, 15b', 100b and 15a, 15a', 100a) at a right angle to the coupling axis (A).

2. The quick connect coupling as claimed in claim 1, **characterized in that** in the coupled state a coaxial annular space (82) for the transfer of the hydraulic fluid, which annular space is sealed to both sides in the axial direction, is configured between the two connecting parts (15a, 15b, 15a', 15b'), and **in that** the two connecting parts (15a, 15b, 15a', 15b') can exchange hydraulic fluid with the annular space (82) through radial bores (30, 66).

3. The quick connect coupling as claimed in claim 2, **characterized in that** the two connecting parts (15a, 15b, 15a', 15b') comprise a female connecting part (15a, 15a') and a male connecting part (15b, 15b'), **in that** the male connecting part (15b, 15b') has a first coaxial connecting piston (29, 29') with a first coaxial bore (32), **in that** the female connecting part (15a, 1 5a') has a second coaxial connecting piston (64, 64') with a second coaxial bore (68) for the reception of the first connecting piston (29, 29'), **in that** the coaxial annular space (82) is formed upon the insertion of the first connecting piston (29, 29') into the second coaxial bore (68) of the second connecting piston (64, 64'), and **in that** a first radial bore (30) in the first connecting piston (29, 29') leads from the first coaxial bore (32) into the coaxial annular space (82) and a second radial bore (66) in the second connecting piston (64, 64') leads from the coaxial annular space (82) into the surrounding outer space of the second connecting piston (64, 64').

4. The quick connect coupling as claimed in claim 3, **characterized in that** in the two connecting parts (15a, 15b; 15a', 15b') respectively an outer connection (40, 74) for the hydraulic fluid is arranged and a valve mechanism (19, 22, 23, 24, 32, 33a, 33 b, 34, 35a, 35b, 37 and 55, 58, 59, 60, 68, 69, 70a, 70b, 71), which can preferably be actuated by the plug-in/unplugging operation, is provided, which valve mechanism interrupts the hydraulic connection between the respective connection (40, 74) and the first coaxial bore (32), and the surrounding outer space of the second connecting piston (64, 64'), when the connecting parts (15a, 15b; 15a', 15b') are parted and creates the hydraulic connection between the respective connection (40, 74) and the first coaxial bore (32), and the surrounding outer space of the second connecting piston (64, 64'), when the connecting parts (15a, 15b; 15a', 15b') are plugged together.

5. The quick connect coupling as claimed in claim 4, **characterized in that** the valve mechanism (19, 22, 23, 24, 32, 33a, 33b, 34, 35a, 35b, 37 and 55, 58, 59, 60, 68, 69, 70a, 70b, 71) respectively comprises a sliding sleeve (19, 19' and 55, 55') which is movable relative to the connecting piston (29, 29' and 64, 64') in the axial direction, which sliding sleeve concentrically surrounds the connecting piston (29, 29' and 64, 64') and has a through bore (22 and 58) having a centrally located overflow space (23 and 59) with enlarged internal diameter, the connecting piston (29, 29' and 64, 64') dividing the through bore (22 and 58) by means of a circumferential seal (34 and 69) into two portions which are sealingly separated from each other and which communicate with each other only when, given a specific relative position of connecting piston (29, 29' and 64, 64') and sliding sleeve (19, 19' and 55, 55'), the circumferential seal (34 and 69) is present in the overflow space (23 and 59).

6. The quick connect coupling as claimed in claim 5, **characterized in that** each connecting part (15a, 1 5b; 15a', 15b') has a housing (16, 16' and 48, 48'), **in that** the connecting piston (29, 29' and 64, 64') are respectively fixedly connected to the housing, and **in that** the sliding sleeves (19, 19' and 55, 55') are movable relative to the housing (16, 16' and 48, 48') in the axial direction, and **in that** the sliding sleeves (19, 19' and 55, 55') are retractable against the force of a compression spring (24 and 60) counter to the plug-in direction.

7. The quick connect coupling as claimed in one of claims 3 to 6, **characterized in that** in the second coaxial bore (68) of the second connecting piston (64) a closing piston (51) is arranged, which, when the connecting parts (15a, b) are parted, outwardly closes off the second coaxial bore (68) and, when the connecting parts (15a, b) are plugged together, is retracted from the first connecting piston (29) against the pressure of a compression spring (54) into the second coaxial bore (68).

8. The quick connect coupling as claimed in claim 6, **characterized in that** the connections (40 and 74) are arranged at the rear ends of the connecting pistons (29, 29' and 64, 64'), and **in that** the connecting pistons (29, 29' and 64, 64'), when the hydraulic line is connected, can be inserted into the housing (16, 16' and 48, 48') from the rear and can be fastened to the housing (16, 16' and 48, 48').

9. The quick connect coupling as claimed in claim 1, **characterized in that** in the first connecting part (100a) a first space (137) for the hydraulic fluid is provided, which first space extends in the direction of the coupling axis (A) and communicates at one end with a connecting line (101) of the first connecting part (100a), **in that** in the second connecting part (100b) a second space (139) for the hydraulic fluid is provided, which second space extends in the direction of the coupling axis (A) and communicates at one end with a connecting line (131) of the second connecting part (100b), **in that** the first space (137) can be closed at the other end by a first closing mechanism (106, 110, 118), which seals off the first space (137) in the decoupled state and opens it in the coupled state, **in that** the second space (139) can be closed at the other end by a second closing mechanism (119, 127, 129), which seals off the second space (139) in the decoupled state and opens it in the coupled state, and **in that** both of the spaces (137, 139) and closing mechanisms (106, 110, 118 and 119, 127, 129) are configured such that in the coupled state the hydraulic fluid flows between the two spaces (137, 139) substantially in the radial direction, and **in that**, in the two closing mechanisms (106, 110, 118 and 1 19, 127, 129) for closing the spaces (137, 139), sealing points (118, 119) are configured, in which metal lies sealingly on metal.

10. The quick connect coupling as claimed in claim 9, **characterized in that** the two spaces (137, 139) are configured as annular spaces arranged concentrically to the coupling axis (A).

11. The quick connect coupling as claimed in claim 10, **characterized in that** the annular space (137) in the first connecting part (100a) is configured between a central axial piston rod (136) and an inner sliding sleeve (106) concentrically surrounding the piston rod (136) at a distance, and the associated closing mechanism is formed by the inner sliding sleeve (106) and a connecting piston (110) arranged at the front end of the piston rod, **in that** the annular space (139) in the second connecting part (100b) is configured between a sliding sleeve (127) and an outer tube (1 29) concentrically surrounding the sliding sleeve (127) at a distance, and the associated closing mechanism is formed by the sliding sleeve (1 27) and the outer tube (129), which is tapered at the front end, the inner sliding sleeve (106) and the connecting piston (110) in the first connecting part (100a) having the same external diameter and the tapered end of the outer tube and the sliding sleeve (127) in the second connecting part (100b) having the same internal diameter, and **in that** the external diameter is substantially equal to the internal diameter, so that in the coupling process the inner sliding sleeve (106) and the connecting piston (110) can travel into the tapered end of the outer tube (129) and the sliding sleeve (127).

12. The quick connect coupling as claimed in claim 11, **characterized in that** the closing mechanism in the first connecting part (100a) is opened in the coupling process by the inner sliding sleeve (106) being pushed rearward relative to the fixed connecting piston (110) against the pressure of a spring (105), and **in that** the closing mechanism in the second connecting part (100b) is opened in the coupling process by the sliding sleeve (127) being pushed rearward relative to the fixed, tapered end of the outer tube (129) against the pressure of a spring (128), **in that**, for the displacement of the sliding sleeve (106) in the first connecting part (100a), an outer sliding sleeve (108) is provided, which concentrically encloses the inner sliding sleeve (106), is displaceable in the axial direction and can be actuated by the outer tube (129) of the second connecting part (100b), and that, for the displacement of the sliding sleeve (127) in the second connecting part (100b), a closing piston (123) is provided, which is concentrically enclosed by the sliding sleeve (127), is displaceable in the axial direction and can be actuated by the connecting piston of the first connecting part (100a).

13. The quick connect coupling as claimed in claim 1 2, **characterized in that** in the first connecting part (100a) between the outer sliding sleeve (108) and the connecting piston (110), and in the second connecting part between the closing piston (123) and the tapered end of the outer tube (129) and the sliding sleeve (127), seals (114, 115, 116) are arranged, and **in that** the closing mechanisms (106, 110, 118 and 119, 127, 129) only open when the seals (114, 115, 116) are fully covered.

14. The quick connect coupling as claimed in claim 13, **characterized in that** means for attaining the effect of a check valve are installed in the closing piston (123), which means comprise, in particular, a thin valve disk (132) which closes from the inside valve bores (133) made in the closing piston (123), and **in that** small relief grooves (134) are recessed on the connecting piston (110) and on the closing piston (123) and small grooves (135) are recessed in the closing piston (123) on the end face.

15. A rapid connection system for the connection of hydraulic lines, in particular in earth moving machines and their interchangeable attachments and tools, **characterized in that** a plurality of quick connect couplings as claimed in one of claims 1 to 18 are combined in parallel arrangement in a block (84, 85) or on common carrier plates (107, 122).

## Revendications

1. Raccord rapide (15, 15' ; 100) pour raccorder des conduites hydrauliques, en particulier dans des engins de terrassement ainsi que leurs dispositifs auxiliaires et outils interchangeables, lequel raccord rapide (15, 15' ; 100) comprend une première et une deuxième partie de raccordement (15a, 15a', respectivement 15b, 15b', respectivement 100a, 100b), qui peuvent être accouplées de manière desserrable le long d'un axe d'accouplement (A) en vue du transfert d'un liquide hydraulique, **caractérisé en ce que** dans l'état accouplé, le liquide hydraulique à transférer sort transversalement à l'axe d'accouplement (A) hors d'une des parties de raccordement (15a, 15a', 100a, respectivement 15b, 15b', 100b) et entre directement transversalement à l'axe d'accouplement (A) dans l'autre partie de raccordement (15b, 15b', 100b, respectivement 15a, 15a', 100a).

2. Raccord rapide selon la revendication 1, **caractérisé en ce que** dans l'état accouplé entre les deux parties de raccordement (15a, 15b ; 15a', 15b') est réalisé un espace annulaire (82) coaxial, étanché dans la direction axiale des deux côtés, pour le transfert du liquide hydraulique, et **en ce que** les deux parties de raccordement (15a, 15b ; 15a', 15b') peuvent échanger du liquide hydraulique avec l'espace annulaire (82) par le biais d'alésages radiaux (30, 66).

3. Raccord rapide selon la revendication 2, **caractérisé en ce que** les deux parties de raccordement (15a, 15b ; 15a', 15b') comprennent une partie de raccordement femelle (15a, 15a') et une partie de raccordement mâle (15b, 15b'), **en ce que** la partie de raccordement mâle (15b, 15b') présente un premier piston de raccordement coaxial (29, 29') avec un premier alésage coaxial (32), **en ce que** la partie de raccordement femelle (15a, 15a') présente un deuxième piston de raccordement coaxial (64, 64') avec un deuxième alésage coaxial (68) pour recevoir le premier piston de raccordement (29, 29'), **en ce que** l'espace annulaire coaxial (82) est formé lors de l'insertion du premier piston de raccordement (29, 29') dans le deuxième alésage coaxial (68) du deuxième piston de raccordement (64, 64') et **en ce qu'**un premier alésage radial (30) dans le premier piston de raccordement (29, 29') conduit du premier alésage coaxial (32) dans l'espace annulaire coaxial (82) et un deuxième alésage radial (66) conduit dans le deuxième piston de raccordement (64, 64') depuis l'espace annulaire coaxial (82) dans l'espace extérieur environnant du deuxième piston de raccordement (64, 64').

4. Raccord rapide selon la revendication 3, **caractérisé en ce que** dans les deux parties de raccordement (15a, 15b ; 15a', 1 5b') est disposé à chaque fois un raccordement situé à l'extérieur (40, 74) pour le liquide hydraulique et de préférence un mécanisme de soupape (19, 22, 23, 24, 32, 33a, 33b, 34, 35a, 35b, 37, respectivement 55, 58, 59, 60, 68, 69, 70a, 70b, 71) pouvant être actionné par l'opération d'enfichage est prévu, lequel interrompt la connexion hydraulique entre le raccordement respectif (40, 74) et le premier alésage coaxial (32) ou l'espace extérieur environnant du deuxième piston de raccordement (64, 64'), quand les parties de raccordement (15a, 15b ; 15a', 15b') sont écartées l'une de l'autre, et établit la connexion hydraulique entre le raccordement respectif (40, 74) et le premier alésage coaxial (32) ou l'espace extérieur environnant du deuxième piston de raccordement (64, 64') quand les parties de raccordement (15a, 15b ; 15a', 15b') sont enfichées l'une dans l'autre.

5. Raccord rapide selon la revendication 4, **caractérisé en ce que** le mécanisme de soupape (19, 22, 23, 24, 32, 33a, 33b, 34, 35a, 35b, 37, respectivement 55, 58, 59, 60, 68, 69, 70a, 70b, 71) comprend à chaque fois un manchon coulissant (19, 19', respectivement 55, 55') déplaçable dans la direction axiale par rapport au piston de raccordement (29, 29', respectivement 64, 64'), qui entoure de manière concentrique le piston de raccordement (29, 29', respectivement 64, 64') et présente un alésage traversant (22, respectivement 58) avec un espace de trop-plein (23, respectivement 59) de diamètre intérieur agrandi disposé au centre, le piston de raccordement (29, 29', respectivement 64, 64') divisant l'alésage traversant (22, respectivement 58) au moyen d'un joint d'étanchéité périphérique (34, respectivement 69) en deux portions séparées hermétiquement l'une de l'autre, qui ne sont en liaison l'une avec l'autre que lorsque le joint d'étanchéité périphérique (34, respectivement 69) se trouve dans l'espace de trop-plein (23, respectivement 59) dans une position relative définie du piston de raccordement (29, 29', respectivement 64, 64') et du manchon coulissant (19, 19', respectivement 55, 55').

6. Raccord rapide selon la revendication 5, **caractérisé en ce que** chaque partie de raccordement (15a, 15b ; 15a', 15b') présente un boîtier (16, 16', respectivement 48, 48'), **en ce que** les pistons de raccordement (29, 29', respectivement 64, 64') sont à chaque fois connectés fixement au boîtier, **en ce que** les manchons coulissants (19, 19', respectivement 55, 55') sont déplaçables dans la direction axiale par rapport au boîtier (16, 16', respectivement 48, 48') et **en ce que** les manchons coulissants (19, 19', respectivement 55, 55') peuvent être repoussés à l'encontre de la pression d'un ressort de pression (24, respectivement 60) à l'encontre de la direction d'enfichage.

7. Raccord rapide selon l'une quelconque des revendications 3 à 6, **caractérisé en ce que** dans le deuxième alésage coaxial (68) du deuxième piston de raccordement (64) est disposé un piston de fermeture (51), qui, lorsque les parties de raccordement (15a, b) sont écartées l'une de l'autre, termine vers l'extérieur le deuxième alésage coaxial (68), et lorsque les parties de raccordement (15a, b) sont enfichées l'une dans l'autre, est repoussé par le premier piston de raccordement (29) à l'encontre de la pression d'un ressort de pression (54) dans le deuxième alésage coaxial (68).

8. Raccord rapide selon la revendication 6, **caractérisé en ce que** les raccordements (40, respectivement 74) sont disposés aux extrémités arrière des pistons de raccordement (29, 29', respectivement 64, 64'), et **en ce que** les pistons de raccordement (29, 29', respectivement 64, 64') peuvent être enfoncés depuis l'arrière dans le boîtier (16, 16', respectivement 48, 48') lorsque la conduite hydraulique est raccordée, et peuvent être fixés au boîtier (16, 16', respectivement 48, 48').

9. Raccord rapide selon la revendication 1, **caractérisé en ce que** dans la première partie de raccordement (100a) est prévu un premier espace (137) pour le liquide hydraulique s'étendant dans la direction de l'axe d'accouplement (A), qui est en liaison à une extrémité avec une conduite de raccordement (101) de la première partie de raccordement (100a), **en ce que** dans la deuxième partie de raccordement (100b) est prévu un deuxième espace (139) pour le liquide hydraulique s'étendant dans la direction de l'axe d'accouplement (A), qui est en liaison à une extrémité avec une conduite de raccordement (131) de la deuxième partie de raccordement (100b), **en ce que** le premier espace (137) à l'autre extrémité peut être fermé par un premier mécanisme de fermeture (106, 110, 118), qui ferme hermétiquement le premier espace (137) dans l'état désaccouplé, et l'ouvre dans l'état accouplé, **en ce que** le deuxième espace (139) à l'autre extrémité peut être fermé par un deuxième mécanisme de fermeture (119, 127, 129), qui ferme hermétiquement le deuxième espace (139) dans l'état désaccouplé, et l'ouvre dans l'état accouplé, **en ce que** les deux espaces (137, 139) et les mécanismes de fermeture (106, 110, 118, respectivement 119, 127, 129) sont réalisés de telle sorte que dans l'état accouplé, le liquide hydraulique entre les deux espaces (137, 139) s'écoule essentiellement dans la direction radiale, et **en ce que** dans les deux mécanismes de fermeture (106, 110, 118, respectivement 119, 127, 129) pour fermer les espaces (137, 139) sont réalisées des zones d'étanchéité (118, 119) dans lesquelles du métal est hermétiquement en contact avec du métal.

10. Raccord rapide selon la revendication 9, **caractérisé en ce que** les deux espaces (137, 139) sont réalisés sous forme d'espaces annulaires disposés de manière concentrique à l'axe d'accouplement (A).

11. Raccord rapide selon la revendication 10, **caractérisé en ce que** l'espace annulaire (137) dans la première partie de raccordement (100a) est réalisé entre une tige de piston axiale centrale (136) et un manchon coulissant interne (106) entourant la tige de piston (136) de manière concentrique à distance de celle-ci, et le mécanisme de fermeture associé est formé par le manchon coulissant interne (106) et un piston de raccordement (110) disposé à l'extrémité avant de la tige de piston, **en ce que** l'espace annulaire (139) dans la deuxième partie de raccordement (100b) est réalisé entre un manchon coulissant (127) et un tube extérieur (129) entourant le manchon coulissant (127) de manière concentrique à distance de celui-ci, et le mécanisme de fermeture associé est formé par le manchon coulissant (127) et le tube extérieur (129) se rétrécissant à l'extrémité avant, le manchon coulissant interne (106) et le piston de raccordement (110) dans la première partie de raccordement (100a) présentant le même diamètre extérieur et l'extrémité se rétrécissant du tube extérieur et le manchon coulissant (127) dans la deuxième partie de raccordement (100b) présentant le même diamètre intérieur, et **en ce que** le diamètre extérieur est essentiellement identique au diamètre intérieur, de sorte que lors de l'accouplement, le manchon coulissant interne (106) et le piston de raccordement (110) puissent entrer dans l'extrémité se rétrécissant du tube extérieur (129) et dans le manchon coulissant (127).

12. Raccord rapide selon la revendication 11, **caractérisé en ce que** le mécanisme de fermeture dans la première partie de raccordement (100a) lors de l'accouplement est ouvert par le fait que le manchon coulissant interne (106) est poussé vers l'arrière à l'encontre de la pression d'un ressort (105) par rapport au piston de raccordement fixe (110), **en ce que** le mécanisme de fermeture dans la deuxième partie de raccordement (100b) lors de l'accouplement est ouvert par le fait que le manchon coulissant (127) est poussé vers l'arrière à l'encontre de la pression d'un ressort (128) par rapport à l'extrémité se rétrécissant fixe du tube extérieur (129), **en ce que** pour le déplacement du manchon coulissant (106) dans la première partie de raccordement (100a) est prévu un manchon coulissant externe (108) entourant de manière concentrique le manchon coulissant interne (106), déplaçable dans la direction axiale et pouvant être actionné par le tube extérieur (129) de la deuxième partie de raccordement (100b), et **en ce que** pour le déplacement du manchon coulissant (127) dans la deuxième partie de raccordement (100b) est prévu un piston de fermeture (123) entouré de manière concentrique par le manchon coulissant (127), déplaçable dans la direction axiale et pouvant être actionné par le piston de raccordement de la première partie de raccordement (100a).

13. Raccord rapide selon la revendication 12, **caractérisé en ce que** dans la première partie de raccordement (100a) entre le manchon coulissant externe (108) et le piston de raccordement (110), et dans la deuxième partie de raccordement entre le piston de fermeture (123) et l'extrémité se rétrécissant du tube extérieur (129) et le manchon coulissant (127) sont prévus des joints d'étanchéité (114, 115, 116) et **en ce que** les mécanismes de fermeture (106, 110, 118, respectivement 119, 127, 129) ne s'ouvrent que lorsque les joints d'étanchéité (114, 115, 116) sont complètement recouverts.

14. Raccord rapide selon la revendication 13, **caractérisé en ce que** dans le piston de fermeture (123) sont incorporés des moyens pour obtenir l'effet d'un clapet anti-retour, lesquels moyens comprennent notamment un disque de soupape mince (132), qui ferme de manière étanche à l'huile depuis l'intérieur des alésages de soupape (133) montés dans le piston de fermeture (123), et **en ce que** de petites rainures de décharge (134) sont pratiquées sur le piston de raccordement (1 10) et sur le piston de fermeture (123) et de petites rainures (135) sont pratiquées du côté frontal dans les pistons de fermeture (123).

15. Système de raccord rapide pour la connexion de conduites hydrauliques, en particulier dans des engins de terrassement ainsi que leurs dispositifs auxiliaires et outils interchangeables, **caractérisé en ce que** plusieurs raccords rapides selon l'une quelconque des revendications 1 à 14 sont rassemblés dans un agencement parallèle dans un bloc (84, 85) ou sur des plaques de support communes ( 07, 122).
